# EUROPÄISCHE PATENTSCHRIFT

(11) **EP 1 972 823 B1**
(45) Veröffentlichungstag und Bekanntmachung des Hinweises auf die Patenterteilung: **10.03.2010**
(21) Anmeldenummer: 07023613.8
(22) Anmeldetag: 06.12.2007
(51) Int. Cl.: F16D 65/12

(54) **Bremsscheibe für eine Scheibenbremse eines Fahrzeugs sowie Verfahren zur Herstellung einer solchen Bremsscheibe**
Brake disc for a disc brake of a vehicle and method for manufacturing such a brake disk
Disque de frein pour un frein à disque d'un véhicule et procédé de fabrication d'un tel disque de frein

(30) Priorität: 21.03.2007 DE 102007013512
(43) Veröffentlichungstag der Anmeldung: 24.09.2008
(73) Patentinhaber: AUDI AG, 85045 Ingolstadt (DE)
(72) Erfinder: Saame, Christoph, 85080 Gaimersheim (DE); Waninger, Robert, 85055 Ingolstadt (DE)
(74) Vertreter: Asch, Konrad

(56) Entgegenhaltungen:
- EP-A- 0 352 502
- EP-A- 1 065 403
- WO-A-02/46638
- WO-A-2006/046258
- US-A- 5 161 652

## Beschreibung

Die Erfindung betrifft eine Bremsscheibe für eine Scheibenbremse eines Fahrzeugs, insbesondere eines Kraftfahrzeugs, nach dem Oberbegriff des Patentanspruches 1 sowie ein Verfahren zur Herstellung einer solchen Bremsscheibe nach dem Patentanspruch 10.

Derartige Bremsscheiben können während eines Bremsvorganges hohen thermomechanischen Spannungen ausgesetzt sein, die zur Beschädigung der Bremsscheibe, etwa zu Rissen, führen können.

Zur Reduzierung derartiger Materialspannungen ist aus der DE 40 03 732 A1 eine gattungsgemäße Bremsscheibe bekannt, die zweiteilig aus einem radial inneren Topf, der auf einer Fahrzeugachse bzw. einem Fahrzeugrad angeordnet ist, und einer radial äußeren Reibscheibe besteht, die sich in Radialrichtung erstreckende Verbindungsstege aufweist, die mit dem radial inneren Tragteil verbunden sind. Die Verbindungsstege der äußeren Reibscheibe sind radial nach innen über die Reibscheibe hinaus verlängert und mit ihren jeweiligen Endabschnitten mit Spiel in Eingriff in einer Ausnehmung des radial inneren Topfes. Durch das Spiel zwischen den Verbindungsstegen und den topfseitigen Ausnehmungen ist eine schwimmende Lagerung der radial äußeren Bremsscheibe im radial inneren Tragteil erreicht, und zwar in radialer, axialer und tangentialer Richtung, so dass dauerhafte Materialverformungen ausgeglichen werden können. Außerdem ist die Wärmeübergangsfläche in Richtung auf den Topf verringert, wodurch dieser weiter wärmeentlastet ist.

Eine gattungsgemäße Bremse ist aus WO-A-2006/046258 bekannt.

Die Ausnehmung in dem Topf ist als eine seitlich offene Nut mit geschlossenem Nutboden gestaltet, so dass an beiden Seiten des Tragteils jeweils ein ringförmiges Blech zum Verschließen der Ausnehmung nach beiden Seiten notwendig ist. Die Befestigung der radial äußeren Reibscheibe mit dem radial inneren Tragteil gestaltet sich daher montagetechnisch aufwendig.

Aufgabe der Erfindung besteht darin, eine Bremsscheibe für eine Scheibenbremse eines Fahrzeugs oder ein Verfahren zur Herstellung einer solchen Bremsscheibe bereitzustellen, bei der die Reibscheibe in einfacher Weise mit dem Tragteil verbindbar ist und gleichzeitig thermomechanische Spannungen während des Bremsvorgangs reduziert sind.

Die Aufgabe ist durch die Merkmale des Patentanspruches 1 oder des Patentanspruches 9 gelöst. Vorteilhafte Weiterentwicklungen der Erfindung sind in den Unteransprüchen offenbart.

Gemäß dem kennzeichnenden Teil des Patentanspruches 1 sind zur Verbindung der sich radial erstreckenden Verbindungsstege mit dem Tragteil zumindest die radialen Enden der Verbindungsstege formschlüssig von dem Tragteil umgeben. Dadurch ist eine einfache Verbindung ohne zusätzliche Bauteile, etwa Bewegungsanschläge zum axialen Festlegen der Verbindungsstege im Tragteil, ermöglicht.

Das Tragteil ist topfartig mit einer zylindrisch umlaufenden Seitenwand ausgebildet, wobei die reibscheibenseitigen Verbindungsstege vorteilhaft durch die Seitenwand hindurchtreten. Auf diese Weise ist sichergestellt, dass sich die Reibscheibe in radialer Richtung wärmebedingt frei bewegen kann, ohne dass deren Verbindungsstege mit ihren Stirnseiten gegen das Tragteil anschlagen können. Dies wäre dann der Fall, wenn die Verbindungsstege mit topfseitigen Nuten mit geschlossenen Nutböden in Eingriff sind.

Gemäß einer fertigungstechnisch bevorzugten Ausführungsform sind die radialen Enden der Verbindungsstege vom Tragteil und/oder von der Reibscheibe in einem Gießverfahren umgossen. Alternativ kann der Formschluss zwischen den radialen Enden der Verbindungsstege und dem Tragteil/der Reibscheibe etwa in einem Schmiedevorgang oder einen anderen Formungsschritt hergestellt werden.

Im Folgenden wird der Fall behandelt, dass die Verbindungsstege materialeinheitlich und einstückig an der Reibscheibe angeformt sind und deren radial innere Enden von dem radial inneren Tragteil umgeben bzw. umgossen sind.

Bevorzugt ist es, wenn das Tragteil/die Reibscheibe ohne Stoffschluss mit den radial inneren Enden der Verbindungsstege in einem Gießvorgang vergossen ist. Bei einer sich wärmebedingt radial ausweitenden Reibscheibe können sich daher die Verbindungsstege gegenüber dem Tragteil radial verschieben. Hierbei ist es bevorzugt, wenn die Reibscheibe beispielhaft aus Grauguss oder einem entsprechend anderen Material besteht, das sich zum Bremsen eignet, d. h. Wärme kurzzeitig speichert und an die Umgebung abgeben kann. Das Tragteil kann demgegenüber aus einem Leichtmetall, etwa Aluminium, bestehen, das das an der Reibscheibe erzeugte Bremsmoment auf das Rad übertragen kann. Alternativ können auch andere Materialpaarungen mit unterschiedlichen Schmelzpunkten zum Einsatz kommen.

Für eine einfach aufgebaute sowie einfach zu kühlende Reibscheibe ist es von Vorteil, wenn diese aus zwei axial gegenüberliegenden Reibringen besteht, die über Kühlrippen miteinander verbunden sind. Die umfangsseitig beabstandeten Kühlrippen begrenzen in bekannter Weise radiale Kühlkanäle, wodurch die Reibscheibe innenbelüftet wird. Die Kühlrippen können in einer bevorzugten Ausführungsform zur Bildung der Verbindungsstege radial gegenüber der Bremsscheibe nach innen hin verlängert sein.

Bevorzugt ist die radial äußere Reibscheibe über einen Ringspalt von dem Tragteil beabstandet, wodurch die Wärmeübertragung von der thermomechanisch beanspruchten Reibscheibe zum Tragteil reduziert ist. Zusätzlich kann durch den Ringspalt Kühlluft in die zwischen den Kühlrippen gebildeten Kühlkanäle der gegenüberliegenden Ringscheiben radial nach außen strömen.

Die Belüftung der Reibscheibe kann weiter verstärkt werden, wenn in der umlaufenden Zylinderwand des Topfes Durchtrittskanäle angeordnet werden, die in Umfangsrichtung jeweils zwischen den radial verlängerten Kühlrippen angeordnet sind.

Bevorzugt können sich die Verbindungsstege der Reibscheibe radial nach innen zur Mittelachse der Bremsscheibe konisch verjüngen. Durch die konische Ausgestaltung der Verbindungsstege entsteht bei einer wärmebedingt radialen Reibscheibendehnung automatisch ein geringfügiger Ringspalt zwischen dem jeweiligen Verbindungssteg und der ebenfalls konischen Aufnahmeöffnung des Tragteils. Dadurch reduziert sich die Reibung zwischen den Verbindungsstegen und den topfseitigen Aufnahmeöffnungen, wodurch die Radialbewegung der Verbindungsstege gegenüber dem Tragteil unterstützt wird.

Besonders bevorzugt ist es, wenn sich die Verbindungsstege in Radialrichtung geradlinig zur Bremsscheiben-Mittelachse erstrecken, wodurch Zug- und Druckspannungen in den Verbindungsstegen vermieden werden können. Alternativ oder zusätzlich können dabei die Kühlrippen der Bremsscheibe in Umfangsrichtung bogenförmig verlaufen, um deren Ventilationswirkung zu verstärken, die Festigkeit der Reibscheibe oder deren Gewicht zu beeinflussen. Bevorzugt kann die Reibscheibe symmetrisch ausgebildet sein.

In einem erfindungsgemäßen Verfahren zur Herstellung einer solchen Bremsscheibe bzw. Verbundbremsscheibe wird in einem ersten Verfahrensschritt die radial äußere ringförmige Reibscheibe mit den radial nach innen verlängerten, speichenartigen Verbindungsstegen hergestellt. Die Herstellung der Reibscheibe erfolgt dabei bevorzugt in einem Gießverfahren, etwa mit Grauguss. Die so vorgeformte Reibscheibe wird anschließend in ein Gusswerkzeug gelegt, woraufhin in einem zweiten Verfahrensschritt das radial innere Tragteil um die inneren Enden der Verbindungsstege gegossen wird. Auf diese Weise ist ein fertigungstechnisch einfaches Herstellungsverfahren bereitgestellt.

Nachfolgend sind drei Ausführungsbeispiele der Erfindung anhand der beigefügten Figuren beschrieben.

Es zeigen:
- **Fig. 1 und 2**: jeweils im Halbschnitt eine innenbelüftete Verbundbremsscheibe gemäß dem ersten Ausführungsbeispiel;
- **Fig. 3**: eine innenbelüftete Verbundbremsscheibe gemäß dem zweiten Ausführungsbeispiel; und
- **Fig. 4**: im Halbschnitt eine weitere grob schematisch dargestellte Bremsscheibe.

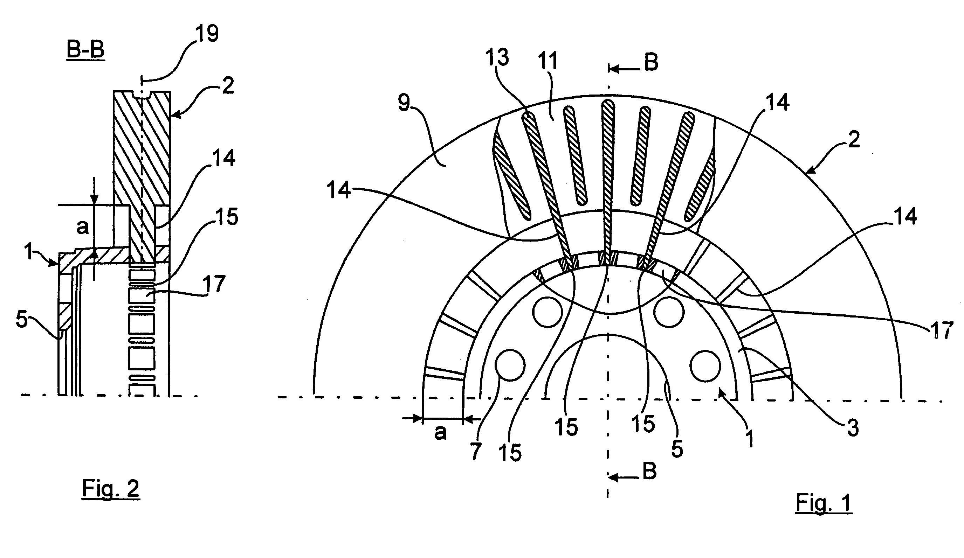

In den **Figuren 1** und **2** ist eine zweiteilig ausgeführte innenbelüftete Verbundbremsscheibe gezeigt, die als ein radial inneres Tragteil einen Topf 1 sowie eine radial äußere Reibscheibe 2 aufweist. Der Topf 1 ist mit einer radial umlaufenden zylindrischen Seitenwand 3 ausgebildet. Bodenseitig weist der Topf bzw. das Tragteil eine mittig angeordnete Zentrieröffnung 5 auf. Die mittig angeordnete Zentrieröffnung 5 ist umfangsseitig von Anschrauböffnungen 7 umgeben.

Wie aus den **Fig. 1 und 2** hervorgeht, ist die Reibscheibe 2 über einen Ringspalt a von der Seitenwand 3 des Tragteils 1 beabstandet. Die Reibscheibe 2 ist dabei aus zwei in Axialrichtung gegenüberliegenden Reibringen 9 und 11 gebildet, die über sogenannte Kühlrippen 13 miteinander einstückig und materialeinheitlich verbunden sind. Die Kühlrippen 13 sind umfangsseitig voneinander beabstandet und erstrecken sich in Radialrichtung geradlinig zur Bremsscheiben-Mittelachse. Jede zweite der Kühlrippen 13 ist beispielhaft über den Innenrand der Reibscheibe 2 hinaus mit einem Verbindungssteg 14 verlängert. Jeder dieser Verbindungsstege 14 ist mit seinem radial inneren Ende formschlüssig vom Tragteil 1 umgossen. Hierbei tritt jeder der Verbindungsstege 14 mit seinem radial inneren Ende durch die Seitenwand 3 des Tragteils 1 hindurch. Die radial inneren Stirnseiten 15 der Verbindungsstege 14 sind daher innenseitig der Seitenwand 3 freigelegt. Dadurch ist eine behinderungsfreie Radialbewegung der Verbindungsstege 14 gegenüber der Topf-Seitenwand 3 ermöglicht.

Im vorliegenden Ausführungsbeispiel ist die Reibscheibe materialeinheitlich und einstückig mit den Reibringen 9, 11 sowie den Kühlrippen 13 materialeinheitlich und einstückig in einem Gießverfahren als ein Graugussteil hergestellt. Die so hergestellte Reibscheibe 2 wird anschließend in ein Gießwerkzeug, d. h. einer Kokille, gelegt und mit einem Aluminiumgießmaterial umgossen, das das Tragteil 1 der Bremsscheibe bildet. Aufgrund der unterschiedlichen Schmelzpunkte dieser Materialpaarung aus Grauguss und Aluminium erfolgt vorteilhaft keine Stoffschlussverbindung zwischen der Reibscheibe 2 und dem Topf 1, sondern lediglich eine Formschlussverbindung. Bei einer wärmebedingten radialen Ausweitung der Reibscheibe 2 können sich daher die Verbindungsstege 14 gegenüber dem Topf 1 frei bewegen, wodurch thermomechanische Spannungen zwischen der Reibscheibe 2 und dem Topf 1 ausgeglichen werden.

Wie weiter aus der **Fig. 1** hervorgeht, verjüngen sich die mit den Verbindungsstegen 14 verlängerten Kühlrippen 13 zur Mittelachse der Bremsscheibe konisch. Bei einer wärmebedingten radialen Ausweitung der Reibscheibe 2 bildet sich daher zwischen den gleitenden konischen Verbindungsstegen 14 und den ebenfalls konischen Durchtrittskanälen der Topf-Seitenwand 3 automatisch ein geringfügiger Ringspalt. Der Ringspalt reduziert zusätzlich Reibungskräfte bzw. mechanische Spannungen, die bei einer Radialbewegung der Verbindungsstege 14 gegenüber der Seitenwand 3 entstehen können.

Alternativ zur oben angegebenen Materialpaarung kann jede andere Materialpaarung eingesetzt werden, deren Materialien für die Reibscheibe 2 und den Topf 1 unterschiedliche Schmelzpunkte aufweisen. Darüber hinaus muss das Material der Reibscheibe 2 für den Reibvorgang geeignet sein, während das Topf-Material den auftretenden Scherkräften standhalten muss. So können als Reibscheiben-Material eine Keramik oder Kohlefasermaterial, und als Topf-Material Teflon oder ein anderer hochfester Kunststoff oder Sinterwerkstoff eingesetzt werden.

Zwischen den in Umfangsrichtung benachbarten Verbindungsstegen 14 ist jeweils eine Durchtrittsöffnung 17 in der Topf-Seitenwand 3 angeordnet. Auf diese Weise kann Luft vom Innenraum des Topfes 1 über die Durchtrittsöffnungen 17 in die zwischen den Kühlrippen 13 gebildeten Kühlkanäle strömen, wodurch insbesondere die Ringscheibe 2 vorteilhaft innenbelüftet wird.

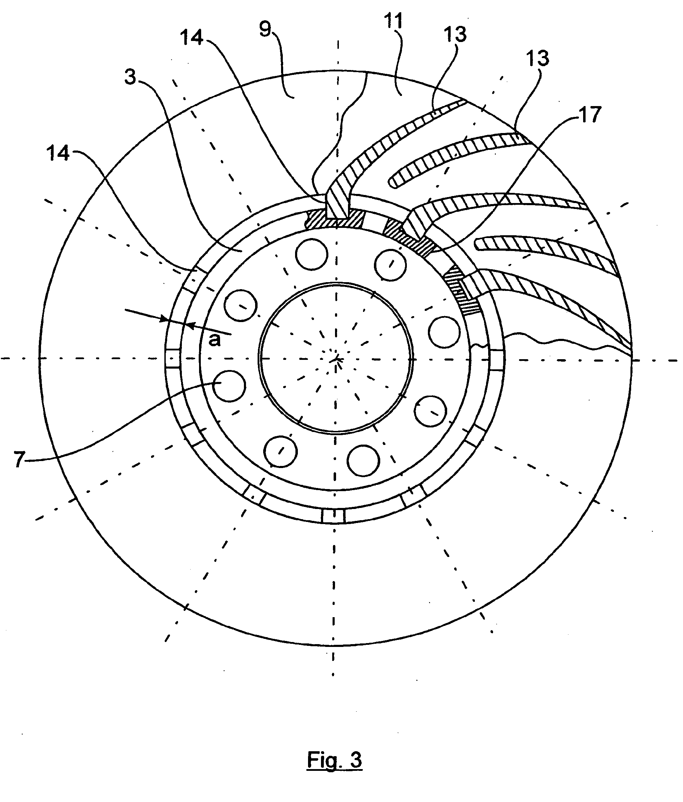

In der **Fig. 3** ist eine innenbelüftete Verbundbremsscheibe gemäß dem zweiten Ausführungsbeispiel in Seitenansicht gezeigt. Die Verbundbremsscheibe ist dabei im wesentlichen identisch mit der in den **Figuren 1** und **2** gezeigte Verbundbremsscheibe. Im Unterschied zu den **Figuren 1** und **2** sind jedoch die Verbindungsstege 14 der Kühlrippen 13 nicht konisch ausgebildet und durch die Seitenwand 3 des Tragteils 1 hindurchgeführt. Vielmehr sind in der **Fig. 2** auch die Stirnseiten 15 der Verbindungsstege 14 vom Tragteil 1 umgossen. D. h., dass das radial innere Ende eines jeden Verbindungsstegs 14 in einer im Querschnitt sacklochartigen Ausnehmung der Seitenwand 3 des Tragteils 1 eingesetzt ist. Darüber hinaus erstrecken sich die Kühlrippen 13 in Radialrichtung nicht geradlinig, sondern verlaufen diese vielmehr in Umfangsrichtung bogenförmig.

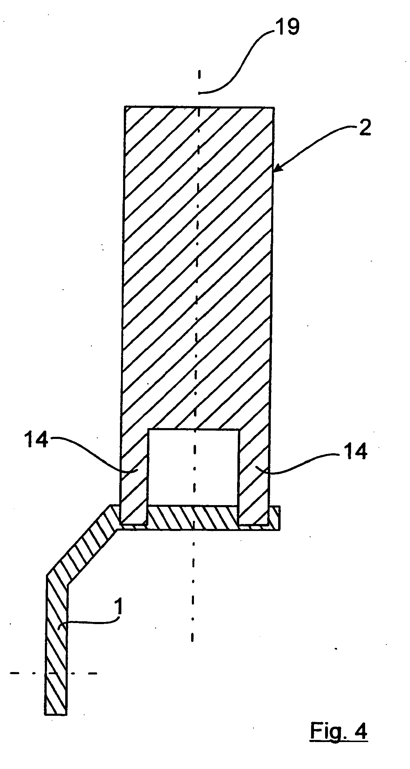

Wie aus der **Fig. 2** hervorgeht, ist die Reibscheibe 2 mit ihren Verbindungsstegen 14 symmetrisch zu einer sich radial erstreckenden Symmetrieachse 19 gestaltet. Durch die symmetrische Gestaltung der Reibscheibe 2 erfolgt eine gleichmäßige wärmebedingte Reibscheibenausdehnung, ohne dass sich die Reibscheibe 2 in Axialrichtung deformiert. Gemäß der **Fig. 4** ist eine weitere Bremsscheibe mit einer solchen, symmetrisch gestalteten Reibscheibe 2 gezeigt. Demzufolge weist die Reibscheibe 2 im Querschnitt nicht nur einen zentrisch angeordneten Verbindungssteg 14 auf, sondern zwei gegenüber der Symmetrieachse 19 symmetrisch, voneinander beabstandet angeordnete benachbarte Verbindungsstege 14.

## Patentansprüche

1. Bremsscheibe für eine zweiteilig ausgeführte Scheibenbremse eines Fahrzeugs, insbesondere eines Kraftfahrzeugs, mit einem radial inneren Tragteil (1), das auf einer Fahrzeugachse bzw. einem Fahrzeugrad abstützbar ist sowie topfartig mit einer zylindrisch umlaufenden Seitenwand (3) ausgebildet ist, und einer radial äußeren Reibscheibe (2), die über sich in Radialrichtung erstreckende Verbindungsstege (14) mit dem radial inneren Tragteil (1) verbunden ist, wobei zur Verbindung der sich radial erstreckenden Verbindungsstege (14) mit dem Tragteil (1) zumindest die radialen Enden der Verbindungsstege (14) formschlüssig von dem Tragteil (1) umgeben sind, **dadurch gekennzeichnet, dass** die Verbindungsstege (14) zum Ausgleich einer wärmebedingten Reibscheibendehnung in Radialrichtung durch Aufnahmeöffnungen der Seitenwand (3) des Tragteils (1) hindurchtreten.

2. Bremsscheibe nach Anspruch 1, **dadurch gekennzeichnet, dass** das Tragteil (1) bzw. die Reibscheibe (2) ohne Stoffschluss mit den radialen Enden der Verbindungsstege (14) in Verbindung ist bzw. in einem Gießvorgang damit vergossen ist.

3. Bremsscheibe nach einem der Ansprüche 1 oder 2, **dadurch gekennzeichnet, dass** die Reibscheibe (2) ein Graugussteil und/oder das Tragteil (1) ein Aluminiumgussteil ist.

4. Bremsscheibe nach einem der vorhergehenden Ansprüche, **dadurch gekennzeichnet, dass** die Reibscheibe (2) zwei axial gegenüberliegende Reibringe (9, 11) aufweist, die über Kühlrippen (13) miteinander verbunden sind, die zur Bildung der Verbindungsstege (14) gegenüber den Reibringen (9, 11) radial nach innen verlängert sind.

5. Bremsscheibe nach Anspruch 4, **dadurch gekennzeichnet, dass** die umlaufende Zylinderwand (3) des Tragteils (1) Durchtrittskanäle (17) zur Belüftung aufweist, die in Umfangsrichtung jeweils zwischen den radial verlängerten Kühlrippen (13) angeordnet sind.

6. Bremsscheibe nach einem der vorhergehenden Ansprüche, **dadurch gekennzeichnet, dass** die Verbindungsstege (14) radial nach innen zur Mittelachse der Bremsscheibe konisch verjüngt sind.

7. Bremsscheibe nach einem der vorhergehenden Ansprüche, **dadurch gekennzeichnet, dass** die Kühlrippen bzw. die Verbindungsstege (14) in Radialrichtung geradlinig zur Bremsscheiben-Mittelachse (13) ausgerichtet sind.

8. Bremsscheibe nach einem der Ansprüche 1 bis 6, **dadurch gekennzeichnet, dass** die Kühlrippen (13) der Bremsscheibe in Umfangsrichtung bogenförmig verlaufen.

9. Verfahren zur Herstellung einer Verbundbremsscheibe, insbesondere einer Bremsscheibe nach einem der Ansprüche 1 bis 8, bei dem eine radial äußere Reibscheibe (2) mit einem radial inneren Tragteil (1) über Verbindungsstege (14) verbunden wird, wobei in einem Verbindungsschritt die freien Enden der Verbindungsstege (14) formschlüssig von dem radial inneren Tragteil und/oder der radial äußeren Reibscheibe (2) umgeben werden.

10. Verfahren nach Anspruch 9, **dadurch gekennzeichnet, dass** in einem ersten Verfahrensschritt vor dem Verbindungsschritt eine radial äußere Reibscheibe (2) mit radial nach innen ragenden Verbindungsstegen (14) hergestellt wird.

## Claims

1. Brake disc for a disc brake, produced in two parts, of a vehicle, and in particular a motor vehicle, having a radially inner carrying part (1) which can be supported on a vehicle axle or a vehicle wheel, as the case may be, and which is of a cup-like configuration having a side-wall (3) extending round in a circle in the form of a cylinder, and having a radially outer friction disc (2) which is connected to the radially inner carrying part (1) by means of connecting bridges (14) extending in the radial direction, with at least the radial ends of the connecting bridges (14) being surrounded by and in positive engagement with the carrying part (1) to enable the radially extending connecting bridges (14) to be connected to the carrying part (1), **characterised in that**, to compensate for any heat-related expansion of the friction disc in the radial direction, the connecting bridges (14) pass through receiving openings in the side-wall (3) of the carrying part (1).

2. Brake disc according to claim 1, **characterised in that**, without a union of the materials, the carrying part (1) and the friction disc (2) are connected to the radial ends of the connecting bridges (14) or are cast onto them in a casting process.

3. Brake disc according to either of claims 1 and 2, **characterised in that** the friction disc (2) is a casting of grey cast iron and/or the carrying part (1) is an aluminium casting.

4. Brake disc according to one of the foregoing claims, **characterised in that** the friction disc (2) has two friction rings (9, 11) situated in opposite positions axially which are connected together by means of cooling ribs (13) which, to form the connecting bridges (14), are extended inwards radially relative to the friction rings (9, 11).

5. Brake disc according to claim 4, **characterised in that** the cylindrical wall (3) of the carrying part (1) which extends round in a circle has through-passages (17) for ventilation which, in the circumferential direction, are arranged between respective parts of the radially extended cooling ribs (13).

6. Brake disc according to one of the foregoing claims, **characterised in that** the connecting bridges (14) taper conically in the radially inward direction towards the centre axis of the brake disc.

7. Brake disc according to one of the foregoing claims, **characterised in that**, in the radial direction, the cooling ribs or connecting bridges (14) are aligned in a straight line with the centre axis (13) of the brake disc.

8. Brake disc according to one of claims 1 to 6, **characterised in that** the cooling ribs (13) of the brake disc extend in a curved form in the circumferential direction.

9. Method for manufacturing a composite brake disc, and in particular a brake disc according to one of claims 1 to 8, in which a radially outer friction disc (2) is connected to a radially inner carrying part (1) by means of connecting bridges (14), the free ends of the connecting bridges (14) being surrounded and positive engaged by the radially inner carrying part and/or by the radially outer friction disc (2) in a connecting step.

10. Method according to claim 9, **characterised in that** a radially outer friction disc (2) having connecting bridges (14) which project inwards radially is produced in a first method step prior to the connecting step.

## Revendications

1. Disque de frein pour un frein à disque réalisé en deux parties, destiné à un véhicule, en particulier un véhicule automobile, avec un élément support (1) radialement intérieur qui est soutenu par un essieu de véhicule respectivement une roue de véhicule et est réalisé en forme de pot avec une paroi latérale (3) périphérique cylindrique, et avec un disque de friction (2) radialement extérieur qui est relié à l'élément support (1) radialement intérieur par le biais de nervures de liaison (14) s'étendant dans le sens radial, dans lequel au moins les extrémités radiales des nervures de liaison (14) sont entourées par l'élément support (1) par correspondance de forme pour relier les nervures de liaison (14) s'étendant radialement à l'élément support (1), **caractérisé en ce que** les nervures de liaison (14) traversent des ouvertures de réception de la paroi latérale (3) de l'élément support (1) pour compenser une dilatation du disque de friction liée à la chaleur dans le sens radial.

2. Disque de frein selon la revendication 1, **caractérisé en ce que** l'élément support (1) respectivement le disque de friction (2) est relié aux extrémités radiales des nervures de liaison (14) sans liaison de matière et respectivement est moulé avec celles-ci dans une opération de moulage.

3. Disque de frein selon l'une quelconque des revendications 1 ou 2, **caractérisé en ce que** le disque de friction (2) est une pièce moulée en fonte grise et/ou l'élément support (1) est une pièce moulée en aluminium.

4. Disque de frein selon l'une quelconque des revendications précédentes, **caractérisé en ce que** le disque de friction (2) présente deux anneaux de friction (9, 11) axialement opposés qui sont reliés l'un à l'autre par le biais de nervures de refroidissement (13), qui sont prolongées radialement vers l'intérieur par rapport aux anneaux de friction (9, 11) pour former les nervures de liaison (14).

5. Disque de frein selon la revendication 4, **caractérisé en ce que** la paroi cylindrique (3) périphérique de l'élément support (1) présente des canaux de passage (17) destinés à la ventilation, qui sont agencés dans le sens périphérique respectivement entre les nervures de refroidissement (13) prolongées radialement.

6. Disque de frein selon l'une quelconque des revendications précédentes, **caractérisé en ce que** les nervures de liaison (14) s'effilent de manière conique radialement vers l'intérieur par rapport à l'axe médian du disque de frein.

7. Disque de frein selon l'une quelconque des revendications précédentes, **caractérisé en ce que** les nervures de refroidissement respectivement les nervures de liaison (14) sont orientées dans le sens radial de manière rectiligne par rapport à l'axe médian du disque de frein (13).

8. Disque de frein selon l'une quelconque des revendications 1 à 6, **caractérisé en ce que** les nervures de refroidissement (13) du disque de frein s'étendent en forme d'arc dans le sens périphérique.

9. Procédé de fabrication d'un disque de frein composite, en particulier d'un disque de frein selon l'une quelconque des revendications 1 à 8, dans lequel un disque de friction (2) radialement extérieur est relié à un élément support (1) radialement intérieur par le biais de nervures de liaison (14), dans lequel dans une étape d'assemblage, les extrémités libres des nervures de liaison (14) sont entourées par correspondance de forme par l'élément support radialement intérieur et/ou le disque de friction (2) radialement extérieur.

10. Procédé selon la revendication 9 **caractérisé en ce qu'**un disque de friction (2) radialement extérieur avec des nervures de liaison (14) dépassant radialement vers l'intérieur est fabriqué dans une première étape de procédé avant l'étape d'assemblage.
